# FASCICULE DE BREVET EUROPEEN

(11) **EP 3 934 952 B1**
(45) Date de publication et mention de la délivrance du brevet: **16.08.2023**
(21) Numéro de dépôt: 20725807.0
(22) Date de dépôt: 02.03.2020
(51) Int. Cl.: B60T 17/22, B60T 13/66, B61H 13/04, F16D 65/18

(54) **SYSTÈME DE FREINAGE COMPORTANT UN DISPOSITIF INDICATEUR DE FREIN DE SERVICE ET VÉHICULE FERROVIAIRE POURVU D'UN TEL SYSTÈME**
EISENBAHNBREMSSYSTEM MIT EINER BETRIEBSBREMSANZEIGEVORRICHTUNG UND SCHIENENFAHRZEUG MIT EINEM SOLCHEN SYSTEM
RAILWAY BRAKING SYSTEM COMPRISING A SERVICE BRAKE INDICATOR DEVICE AND RAIL VEHICLE PROVIDED WITH SUCH A SYSTEM

(30) Priorité: 04.03.2019 FR 1902198
(43) Date de publication de la demande: 12.01.2022
(73) Titulaire: Faiveley Transport Amiens, 80000 Amiens (FR)
(72) Inventeur: GONCALVES, Claudino, 80620 RIBEAUCOURT (FR); SALES, Jeremie, 80000 AMIENS (FR)
(74) Mandataire: Santarelli
(86) Numéro de dépôt international: PCT/FR2020/050415
(87) Numéro de publication internationale: WO 2020/178517

(56) Documents cités:
- EP-A1- 2 826 683
- WO-A1-2017/149244
- WO-A1-2017/149245
- FR-A1- 3 027 270
- FR-A1- 3 031 488

## Description

### Domaine technique de l'invention

L'invention concerne le domaine du freinage des véhicules ferroviaires. Elle concerne plus particulièrement un système de freinage pour véhicule ferroviaire, comportant un dispositif indicateur prévu pour indiquer un état d'un frein de service dudit système de freinage. Elle concerne également les véhicules ferroviaires comportant un tel système.

### Etat de la technique

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ou plusieurs ressorts se substituant à la force du fluide. Une fois ce frein de parking activé, le frein reste serré en permanence.

On connaît de la demande de brevet européen EP 2 826 684 un système de freinage ferroviaire pourvu notamment d'un frein de parking disposé dans le cylindre de frein de service et comportant un dispositif de blocage configuré pour agir sur une tige du piston de freinage de frein de service, et un dispositif de commande du dispositif de blocage. Le dispositif de blocage et le dispositif de commande sont configurés pour que, lorsque le piston de freinage est dans une position de freinage de service et que le frein de parking est en configuration de travail, le dispositif de commande agit sur ledit dispositif de blocage jusqu'à ce que ce dernier immobilise la tige de piston de sorte à bloquer le piston de freinage dans sa position de freinage de service, et lorsque le frein de parking est en configuration de repos, le dispositif de commande agit sur le dispositif de blocage jusqu'à ce que ce dernier libère la tige de piston de sorte à débloquer le piston de freinage de sa position de freinage de service.

Ces systèmes de freinage sont montés sur le véhicule ferroviaire, pour être en contact avec les disques de frein ou bien les roues. En particulier, ils peuvent être assujettis mécaniquement sur des bogies, ou bien sur les essieux fixés sur les bogies, ou encore sur d'autres dispositifs du type moteur d'entraînement ou boîte de vitesses montés aussi sur les bogies.

La demande de brevet internationale WO 2017/149244 concerne un dispositif de détection d'une fonction de frein de parking et divulgue en particulier un système ayant un dispositif de détection d'application du frein de parking configuré pour traiter une information représentative de l'alimentation de la chambre de pression de frein de service et une information représentative de la vidange de la chambre de pression de frein de parking, en vue de déclencher un indicateur représentatif de l'application du frein de parking ; et un système ayant une pièce de déverrouillage elle-même pourvue d'un indicateur visuel, par exemple un soufflet de couleur, de sorte à indiquer visuellement l'état de la pièce de verrouillage.

### Exposé de l'invention

L'invention concerne un système de freinage pour véhicule ferroviaire, comportant un dispositif indicateur prévu pour indiquer de manière fiable un état d'un frein de service du système, tout en étant simple, commode et économique.

L'invention a ainsi pour objet, sous un premier aspect, un système de freinage ferroviaire pour véhicule ferroviaire à freins à au moins une garniture ou à au moins une semelle, comportant une timonerie de freinage configurée pour agir sur au moins un dit frein, un frein de service comportant un piston de freinage mobile par rapport audit corps pour agir sur ladite timonerie de freinage et délimitant avec ledit corps la chambre de pression de frein de service configurée pour être alimentée par une première source d'agent de pression pneumatique pour mettre ledit piston de freinage dans une position de freinage de service, un frein de parking configuré pour agir sur ledit piston de freinage dudit frein de service et admettant une configuration de travail et une configuration de repos ; ledit frein de parking comportant un dispositif de blocage mobile par rapport audit corps pour agir sur ledit piston de freinage et admettant une première position et une seconde position dans laquelle ledit dispositif de blocage est configuré pour immobiliser ledit piston de freinage en position de freinage de service, ledit frein de parking étant alors en configuration de travail, un dispositif de commande mobile par rapport audit corps et admettant une position de verrouillage dans laquelle ledit dispositif de commande est configuré pour maintenir ledit dispositif de blocage dans sa seconde position, et le système comporte en outre un dispositif de relayage configuré pour générer, à partir dudit premier agent de pression pneumatique, une pression d'utilisation à un débit déterminé pour le remplissage de ladite chambre de pression de frein de service pour mettre ledit piston de freinage dans sa position de freinage de service, ledit dispositif de relayage étant raccordé à ladite chambre de pression de frein de service par une première conduite d'alimentation du frein de service, et un dispositif indicateur de frein de service configuré pour recevoir au moins une information représentative de l'alimentation et/ou de la vidange de ladite chambre de pression de frein de service par ledit premier agent de pression pneumatique, avec le dispositif indicateur de frein de service qui comporte au moins un dispositif contacteur de service, dit deuxième dispositif contacteur de service, raccordé via une conduite d'état à une conduite de frein de service située en amont du dispositif de relayage, et configuré pour récupérer ladite information représentative de l'alimentation et/ou de la vidange de la chambre de pression de frein de service.

On entend par position de freinage de service un déplacement du piston de freinage suite à une consigne de frein de service proprement dit, ou bien une consigne de frein d'urgence ou encore une consigne preset telle que décrite ci-dessous.

Ledit système de freinage ferroviaire est configuré pour alimenter la chambre de pression de frein de service avec un autre agent de pression pneumatique dont la valeur de pression est déterminée, de sorte à appliquer un effort de freinage déterminé lorsque ledit frein de parking est en configuration de travail, et ledit dispositif indicateur de frein de service est configuré pour recevoir au moins une information représentative de l'alimentation et/ou de la vidange de ladite chambre de pression de frein de service par ledit autre agent de pression pneumatique.

Le dispositif indicateur du système de freinage ferroviaire est ainsi configuré pour détecter et indiquer l'état dans lequel se trouve le frein de service en tenant compte de l'état de la chambre de pression de frein de service, qu'elle soit alimentée par le premier agent de pression pneumatique ou par l'autre agent de pression pneumatique.

La prise en considération de l'état de la chambre de pression de frein de service peut se faire en recevant une information visant directement la pression dans cette chambre ou bien visant des consignes d'application du frein de parking et/ou du frein de service.

Des caractéristiques préférées, simples, commodes et économiques du système selon l'invention sont présentées ci-après.

Le dispositif indicateur de frein de service peut comporter en outre un premier dispositif contacteur de service qui est raccordé à une première conduite d'alimentation du frein de service, et/ou un troisième dispositif contacteur de service raccordé via une conduite d'état à une conduite de frein de parking, et/ou un quatrième dispositif contacteur de service raccordé via une conduite d'état à une conduite de frein de parking.

Ledit dispositif indicateur de frein de service peut comporter un deuxième dispositif contacteur de service qui est raccordé via une conduite d'état à une conduite de frein de service et les premier, troisième et quatrième dispositifs contacteur respectifs de service, avec les troisième et quatrième dispositifs contacteur respectifs de service qui peuvent être raccordés d'une part aux premier et deuxième dispositifs contacteur de service, et d'autre part, à des dispositifs d'indication visuelle de service du dispositif indicateur.

Les premier, deuxième, troisième et/ou quatrième dispositifs contacteur de service peuvent être formés par des manostats ou des capteurs.

Le système peut être configuré pour que, lorsque le premier dispositif contacteur de service reçoit une information de la première conduite
d'alimentation selon laquelle cette dernière alimente la chambre de pression du frein de service et que le quatrième dispositif contacteur de service reçoit une information de la conduite d'état selon laquelle il n'y a pas de consigne de frein de parking dans la conduite de frein de parking, cela signifie que le frein de service est dans l'état serré et le dispositif d'indication visuelle de service est alors allumé ; et/ou lorsque le deuxième dispositif contacteur de service reçoit une information de la conduite d'état selon laquelle il y a une consigne de frein de service dans la conduite de frein de service et que le quatrième dispositif contacteur de service reçoit une information de la conduite d'état selon laquelle il y a une consigne de frein de parking dans la conduite de frein de parking correspondant à une consigne d'application du frein de parking, cela signifie que le frein de service est dans l'état serré et le dispositif d'indication visuelle de service est alors allumé.

Le système peut être configuré pour que, lorsque le premier dispositif contacteur de service reçoit une information de la première conduite d'alimentation selon laquelle cette dernière n'alimente pas la chambre de pression du frein de service et que le troisième dispositif contacteur de service reçoit une information de la conduite d'état selon laquelle il n'y a pas de consigne de frein de parking dans la conduite de frein de parking, cela signifie que le frein de service est dans l'état desserré et le dispositif d'indication visuelle de service est alors allumé ; et/ou lorsque le deuxième dispositif contacteur de service reçoit une information de la conduite d'état selon laquelle il n'y a pas de consigne de frein de service dans la conduite de frein de service et que le troisième dispositif contacteur de service reçoit une information de la conduite d'état selon laquelle il y a une consigne de frein de parking dans la conduite de frein de parking correspondant à une consigne d'application du frein de parking, cela signifie que le frein de service est dans l'état desserré et le dispositif d'indication visuelle de service est alors allumé.

Le système peut être configuré pour que, lorsque le premier dispositif contacteur de service reçoit une information de la première conduite d'alimentation selon laquelle cette dernière alimente la chambre de pression du frein de service et que le deuxième dispositif contacteur de service reçoit une information de la conduite d'état selon laquelle il y a une consigne de frein de service dans la conduite de frein de service, cela signifie que le frein de service est dans l'état serré et le dispositif d'indication visuelle de service est alors allumé.

Le système peut être configuré pour que, lorsque le premier dispositif contacteur de service reçoit une information de la première conduite d'alimentation selon laquelle cette dernière n'alimente pas la chambre de pression du frein de service, cela signifie que le frein de service est dans l'état desserré et le dispositif d'indication visuelle de service est alors allumé ; et/ou lorsque le premier dispositif contacteur de service reçoit une information de la première conduite d'alimentation selon laquelle cette dernière alimente la chambre de pression du frein de service et que le deuxième dispositif contacteur de service reçoit une information de la conduite d'état selon laquelle il n'y a pas une consigne de frein de service dans la conduite de frein de service, cela signifie que le frein de service devrait être dans l'état desserré et le dispositif d'indication visuelle de service est alors allumé.

Le troisième dispositif contacteur de service peut être interposé entre les premier et deuxième dispositifs contacteur de service.

Le système peut être configuré pour que, lorsque le premier dispositif contacteur de service reçoit une information de la première conduite d'alimentation selon laquelle cette dernière alimente la chambre de pression du frein de service, que le troisième dispositif contacteur de service reçoit une information de la conduite d'état selon laquelle il y a une consigne de frein de parking dans la conduite de frein de parking correspondant à une consigne d'application du frein de parking, et que le deuxième dispositif contacteur de service reçoit une information de la conduite d'état selon laquelle il y a une consigne de frein de service dans la conduite de frein de service, cela signifie que le frein de service est dans l'état serré et le dispositif d'indication visuelle de service est alors allumé ; et/ou lorsque le premier dispositif contacteur de service reçoit une information de la première conduite d'alimentation selon laquelle cette dernière alimente la chambre de pression du frein de service et que le troisième dispositif contacteur de service reçoit une information de la conduite d'état selon laquelle il n'y a pas de consigne de frein de parking dans la conduite de frein de parking, cela signifie que le frein de service est dans l'état serré et le dispositif d'indication visuelle de service est alors allumé.

Le système peut être configuré pour que, lorsque le premier dispositif contacteur de service reçoit une information de la première conduite d'alimentation selon laquelle cette dernière alimente la chambre de pression du frein de service, que le troisième dispositif contacteur de service reçoit une information de la conduite d'état selon laquelle il y a une consigne de frein de parking dans la conduite de frein de parking correspondant à une consigne d'application du frein de parking, et que le deuxième dispositif contacteur de service reçoit une information de la conduite d'état selon laquelle il n'y a pas de consigne de frein de service dans la conduite de frein de service, cela signifie que le frein de service est dans l'état desserré et le dispositif d'indication visuelle de service est alors allumé ; et/ou le premier dispositif contacteur de service reçoit une information de la première conduite d'alimentation selon laquelle cette dernière n'alimente pas la chambre de pression du frein de service, cela signifie que le frein de service est dans l'état desserré et le dispositif d'indication visuelle de service est alors allumé.

L'invention a aussi pour objet, sous un deuxième aspect, un véhicule ferroviaire à freins à au moins une garniture ou à au moins une semelle, comportant au moins un système de freinage ferroviaire tel que décrit ci-dessus et configuré pour agir sur ladite au moins une garniture ou sur ladite au moins une semelle dudit véhicule ferroviaire.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement et partiellement un système de freinage ferroviaire pourvu notamment d'un frein de service, d'un frein de parking et d'une unité de contrôle et de commande.
La figure 2 représente schématiquement de manière plus détaillée l'unité de contrôle et de commande illustrée sur la figure 1 et un réseau de cheminement de conduites du système qui est connecté à cette unité.
La figure 3 montre plus en détail une partie de l'unité contrôle et de commande illustrée sur la figure 2, à savoir un dispositif indicateur de frein de parking et/ou de frein de service du système de freinage ferroviaire.
La figure 4 montre la partie du dispositif indicateur illustré sur la figure 3 et qui est prévue en particulier pour indiquer un état du frein de parking.
La figure 5 illustre une première configuration du frein de parking.
La figure 6 illustre une deuxième configuration du frein de parking.
La figure 7 illustre une troisième configuration du frein de parking.
La figure 8 montre la partie du dispositif indicateur illustré sur la figure 3 et qui est prévue en particulier pour indiquer un état du frein de service.
La figure 9 montre une première variante de réalisation de la partie du dispositif indicateur prévue pour indiquer un état du frein de service.
La figure 10 montre une deuxième variante de réalisation de la partie du dispositif indicateur prévue pour indiquer un état du frein de service.
La figure 11 montre une troisième variante de réalisation de la partie du dispositif indicateur prévue pour indiquer un état du frein de service.

### Description détaillée

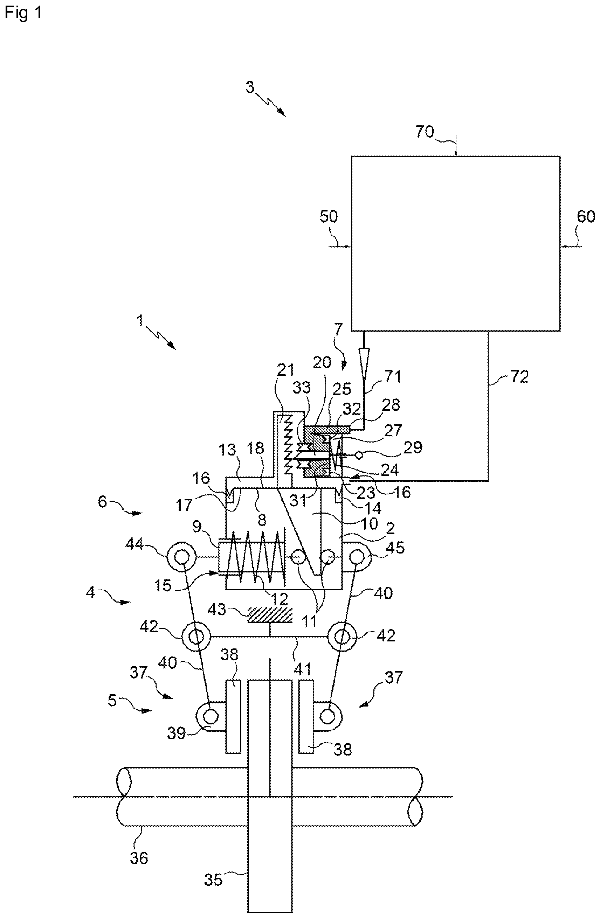

La figure 1 représente schématiquement un système de freinage ferroviaire 1 pour un véhicule ferroviaire à frein à garnitures ou à semelles.

Il s'agit d'un système de freinage ferroviaire structurellement du type de celui décrit dans la demande de brevet européen EP 2 826 684.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés, respectivement un premier côté 17 configuré pour agir sur la timonerie de freinage 4 par l'intermédiaire de la tige de poussée 9, et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14, par exemple formée par un joint d'étanchéité, disposée entre ce piston de freinage 8 et des bords intérieurs du corps 2.

Le frein de service 6 peut comporter une pièce de coin 10 fixée sur le premier côté 17 du piston de freinage 8.

Cette pièce de coin 10 peut présenter une section triangulaire et être configurée pour coopérer avec un jeu de butées à roulements 11, dont l'une des butées à roulements peut être reliée au corps 2 tandis que l'autre des butées à roulements peut être reliée à la tige de poussée 9.

Cette tige de poussé 9 peut être pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 peut comporter un ressort 12 disposé autour de la tige de poussée 9, entre la butée à roulements qui est reliée à cette dernière et un bord intérieur du corps 2. Ce ressort 12 est configuré pour rappeler la butée qui est reliée à la tige de poussée 9 contre la pièce de coin 10.

Le frein de service 6 peut comporter un premier orifice 15 ménagé dans le corps 2 et configuré pour autoriser le déplacement de la tige de poussée 9 au travers de ce premier orifice 15.

Le frein de service 6 peut comporter un deuxième orifice 16 ménagé dans le corps 2 et débouchant dans la chambre de pression de frein de service 13.

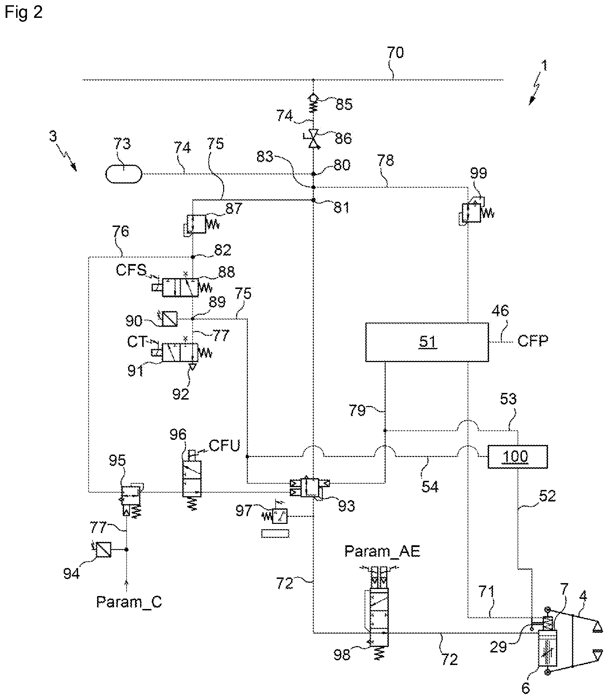

La chambre de pression de frein de service 13 est ici raccordée par une première conduite d'alimentation 72 du réseau de cheminement de conduites pneumatiques, appelée plus généralement conduite de frein, laquelle conduite est connectée au niveau de ce deuxième orifice 16 à une source d'alimentation en agents de pression pneumatiques 73 (visible figure 2).

Le corps 2 comporte une cavité 27 accolée à la chambre de pression de frein de service 13 et dans laquelle est disposé le frein de parking 7.

Le frein de parking 7 comporte un dispositif de blocage formé par un doigt de blocage 20 mobile par rapport au corps 2 et s'étendant suivant la deuxième direction axiale.

Le frein de parking 7 comporte un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et qui est tourné vers la chambre de pression de frein de parking 25, ainsi qu'un second côté 32 opposé au premier côté.

Le frein de parking 7 comporte un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

Le piston de maintien 23 et l'élément ressort 24 peuvent former un dispositif de commande mobile du frein de parking 7.

Le piston de maintien 23 est configuré pour se déplacer dans le corps 2 tout en maintenant la chambre de pression de frein de parking 25 relativement étanche grâce à une membrane disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

L'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte un quatrième orifice 28 ménagé dans le corps 2 et débouchant dans la chambre de pression de frein de parking 25.

La chambre de pression de frein de parking 25 peut être raccordée par une deuxième conduite d'alimentation 71 du réseau de cheminement de conduites pneumatiques, appelée aussi conduite de frein de parking, connectée au niveau de ce quatrième orifice 28, à la source d'alimentation en agents de pression pneumatiques 73 (visible figure 2) via l'unité 3.

Le frein de parking 7 comporte une pièce de déverrouillage 29 pour désactiver le frein de parking 7.

La pièce de déverrouillage 29 peut par exemple être rattachée sur le deuxième côté 32 du piston de maintien 23 et déboucher à l'extérieur du corps 2 au travers d'un cinquième orifice (non représenté) ménagé dans ce corps 2 et débouchant dans la cavité 27.

La pièce de déverrouillage 29 est accessible pour être manipulée depuis l'extérieur du corps 2 le cas échéant.

Ainsi qu'expliqué plus loin, la pièce de déverrouillage 29 est connecté à un dispositif indicateur prévu pour indiquer un état du frein de parking 7 et/ou un état du frein de service 6.

En particulier, la pièce de déverrouillage 29 peut être couplée à un commutateur assujetti mécaniquement à cette pièce 29 et présentant une première position et une deuxième position sélectionnée en fonction de la position de la pièce de déverrouillage 29.

Le frein de service 6 est disposé dans le corps 2 et est configuré pour agir sur le frein 5 par l'intermédiaire de la timonerie de freinage 4.

Ce frein 5 peut comporter un disque de frein 35 (ici vu de dessus) monté par exemple sur un essieu 36 de véhicule ferroviaire, ou directement sur la roue à freiner.

Ce frein 5 peut comporter deux patins 37 pourvus chacun d'une garniture 38 configurée pour être appliquée au contact du disque 35 pour réduire sa vitesse de rotation et par conséquent celle de la roue à freiner, ainsi que d'un oeillet de fixation 39 ménagé à l'opposé de la surface de la garniture 38 configurée pour venir s'appliquer sur le disque de frein 35.

La timonerie de freinage 4 peut comporter deux ou quatre leviers déformables 40 pourvus chacun d'une portion supérieure et d'une portion inférieure qui sont solidaires. Seulement deux leviers sont ici illustrés et, dans le cas où la timonerie présente quatre leviers, ils peuvent être solidaires deux à deux ou en variante indépendants les uns des autres.

Chaque portion des leviers 40 peut être articulée sur un connecteur central 41 par l'intermédiaire de deux pivots 42.

La portion inférieure de chaque levier déformable 40 peut être reliée à l'un des patins 37 par l'intermédiaire de son oeillet de fixation 39.

La portion supérieure de chaque levier déformable 40 peut être reliée à une articulation respective 44, 45.

La timonerie de freinage 4 peut recevoir le corps 2 entre les portions supérieures des leviers déformables 40, au niveau des articulations 44 et 45.

Le corps 2 peut être monté à rotation sur l'articulation 44 qui est solidaire d'une extrémité de la tige de poussée 9 tandis qu'il peut être monté fixe sur l'articulation 45, laquelle est directement solidaire de ce corps 2.

La timonerie de freinage 4 peut comporter une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

Le rapprochement des articulations 44 et 45 peut permettre d'écarter les patins 37 l'un de l'autre et qu'à l'inverse, l'éloignement de ces articulations 44 et 45 peut permettre de serrer les patins 37 sur le disque de frein 35 (ou sur la roue du véhicule ferroviaire).

L'unité de contrôle et de commande 3 est connectée à la chambre de pression de frein de service 13 par l'intermédiaire de la première conduite d'alimentation 72 à laquelle elle est raccordée.

Cette unité 3 est connectée à la chambre de pression de frein de parking 25 par l'intermédiaire de la seconde conduite d'alimentation 71 à laquelle elle est raccordée.

Cette unité 3 est alimentée en agents pneumatiques par une conduite principale 70 qui chemine généralement le long du véhicule ferroviaire.

L'unité 3 comporte des éléments systémiques (non représentés sur la figure 1) qui sont configurés pour recevoir et traiter des informations représentatives relatives par exemple à des consignes de fonctionnement du véhicule ferroviaire, par un premier canal du type électrique et/ou pneumatique et/ou encore manuel, noté 50 sur la figure 1.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté 60 sur la figure 1.

Ces éléments systémiques peuvent par exemple être formés par des relais pneumatiques et/ou des électrovannes et/ou des manostats et/ou des capteurs et/ou des détendeurs et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

L'unité de contrôle et de commande 3 est ici associée à une timonerie de freinage et à un seul frein 5 du véhicule ferroviaire.

En variante, une telle unité de contrôle et de commande peut être associée à un essieu (non illustré) du véhicule ferroviaire, pourvu d'une pluralité de freins 5, ou à un bogie (non illustré) du véhicule ferroviaire, pourvu de deux essieux, ou encore à une voiture (non illustrée) du véhicule ferroviaire, pourvue de deux bogies, ou le véhicule ferroviaire peut ne comporter qu'une seule unité de contrôle et de commande.

La figure 2 représente schématiquement le réseau de cheminement de conduites pneumatiques et l'unité de contrôle et de commande 3.

La conduite principale 70 forme le canal d'acheminement d'un agent pneumatique distribué dans le réseau de cheminement de conduites pneumatiques.

L'agent dans cette conduite principale 70 peut être par exemple à une valeur de pression d'environ 9 bars.

Le réseau peut comporter une conduite dite générale (non représentée), distincte de la conduite principale 70, et s'étendant généralement en parallèle à cette dernière.

La conduite générale peut permettre d'assurer la continuité pneumatique le long du véhicule ferroviaire et peut autoriser le freinage de service du véhicule, en utilisant directement le fluide cheminant dans la conduite générale.

La conduite principale 70 peut permettre quant à elle d'alimenter des équipements notamment du système de freinage ferroviaire, et en particulier la source d'alimentation en agents de pression pneumatiques 73 ici formée par un réservoir dit auxiliaire.

Ce réseau peut comporter une conduite de remplissage et de distribution 74 qui peut être piquée (c'est-à-dire directement raccordée) sur la conduite principale 70, et/ou une conduite de frein de service 75 raccordée par un piquage 81 sur la conduite de remplissage et de distribution 74, et/ou une conduite de frein d'urgence 76 piquée sur la conduite de frein de service 75 par un piquage 82, et/ou une conduite de commande 78 raccordée par un piquage 83 sur la conduite de remplissage et de distribution 74.

La conduite de commande 78 peut se subdiviser en deux conduites au niveau d'un piquage de dérivation 84, respectivement pour former la conduite de frein de parking 71 communiquant directement avec la chambre de pression de frein de parking 25 et une conduite de suralimentation, dite ci-après conduite preset 79 ou conduite de frein de parking ou encore conduite de consigne de frein de parking.

Chacune des conduites de frein de service 75, et/ou de frein d'urgence 76 et/ou preset 79 peut rejoindre la conduite de frein 72 qui communique directement avec la chambre de pression de frein de service 13.

La conduite de remplissage et de distribution 74 peut présenter un premier tronçon de remplissage s'étendant entre le piquage (non représenté) sur la conduite principale 70 et le réservoir auxiliaire 73, ainsi qu'un second tronçon de distribution s'étendant depuis un piquage 80 sur le premier tronçon.

L'unité de contrôle et de commande 3 peut comporter une valve anti-retour 85 disposée sur le premier tronçon de la conduite de remplissage et de distribution 74 à proximité du piquage de cette dernière sur la conduite principale 70, voire un robinet d'isolement 86 disposé également sur ce premier tronçon.

La valve anti-retour 85 peut permettre le remplissage du réservoir auxiliaire 73 par l'agent de pression pneumatique issu de la conduite principale 70 et interdire la vidange du réservoir 73 dans la conduite principale 70 si la pression dans cette dernière devient inférieure à celle dans le réservoir auxiliaire 73.

L'unité de contrôle et de commande 3 peut comporter un dispositif de relayage 93, ou relais pneumatique, alimenté par le second tronçon de distribution de la conduite de remplissage et de distribution 74 et raccordé à la conduite de frein 72.

Ce dispositif de relayage 93 peut être configuré pour générer, à partir de ce second tronçon de distribution et de valeurs pilotes de pression, une pression d'utilisation à un débit déterminé pour le remplissage de la chambre de pression de frein de service 13.

Ces valeurs pilotes de pression peuvent correspondre à des consignes de pression de frein de service, de frein d'urgence et preset, venant respectivement de la conduite de frein de service 75, de la conduite de frein d'urgence 76 et de la conduite preset 79.

L'unité de contrôle et de commande 3 peut comporter sur la conduite de frein de service 75, un détendeur 87 configuré pour limiter la valeur de pression par exemple ici à environ 4 bars ainsi qu'un dispositif de distribution 88 formé par exemple par une électrovanne monostable et configuré pour recevoir un signal de commande correspondant à une consigne de frein de service CFS.

Lorsque la valeur de consigne CFS est nulle, le dispositif de distribution 88 peut être configuré pour interrompre la conduite de frein de service 75 ; et lorsque la valeur de consigne CFS est non nulle, ce dispositif 88 peut être configuré pour autoriser le passage d'un agent de pression pneumatique, appelé premier agent de pression, jusqu'au dispositif de relayage 93 qui reçoit une valeur pilote de pression de frein de service et qui génère une pression de frein de service pour alimenter la chambre de pression de frein de service 13 pour le freinage du véhicule.

L'unité de contrôle et de commande 3 peut comporter un capteur de pression 90 raccordé par un piquage 89 sur la conduite de frein de service 75 et qui permet de contrôler la valeur pilote de pression de frein de service.

L'unité de contrôle et de commande 3 peut comporter une électrovanne de vidange 91 raccordée par le piquage 89 sur la conduite de frein de service 75 et qui permet de vidanger cette conduite via un orifice de vidange 92 sur cette électrovanne 91.

L'électrovanne 91 peut être monostable et être configurée pour recevoir un signal de commande correspondant à une consigne de travail CT et pour fonctionner en inverse.

Lorsque la valeur de consigne CT est non nulle, l'électrovanne 91 peut être configurée pour interrompre la communication de la conduite de frein de service 75 avec l'orifice de vidange 92 ; et lorsque la valeur de consigne CT est nulle, cette électrovanne 91 peut être configurée pour autoriser la communication de cette conduite 75 avec cet orifice de vidange 92.

L'unité de contrôle et de commande 3 peut comporter, sur la conduite de frein d'urgence 76, un dispositif de distribution 96 formé ici par une électrovanne monostable fonctionnant en inverse et configurée pour recevoir un signal de commande correspondant à une consigne de frein d'urgence CFU.

Lorsque la valeur de consigne CFU est non nulle, le dispositif de distribution 96 peut être configuré pour interrompre la conduite de frein d'urgence 76 ; et lorsque la valeur de consigne CFU est nulle, ce dispositif 96 peut être configuré pour autoriser le passage d'un agent de pression pneumatique jusqu'au dispositif de relayage 93 qui reçoit une valeur pilote de pression de frein d'urgence et qui génère une pression de frein d'urgence pour alimenter la chambre de pression de frein de service 13 pour le freinage d'urgence du véhicule.

L'unité de contrôle et de commande 3 peut comporter un limiteur de pression 95 (ou détendeur) sur la conduite de frein d'urgence 76 en amont du dispositif de distribution 96, lequel limiteur 95 peut être contrôlé en fonction d'un paramètre de charge param_C du véhicule reçu via une conduite de charge 77 connectée au limiteur 95 ; et un capteur de pression 94 qui peut être piqué sur la conduite de charge 77.

Le paramètre de charge param_C est une information représentative de la charge du véhicule et peut concerner par exemple un wagon seulement, ou bien plusieurs wagons successifs ou l'intégralité du véhicule ferroviaire.

On notera d'ailleurs que certains paramètres de fonctionnement de certains véhicules ferroviaires peuvent naturellement (ou initialement) être asservis à la charge du véhicule par exemple pour gérer le frein de service tandis que d'autres ne sont pas asservis à la charge du véhicule.

L'unité de contrôle et de commande 3 peut comporter sur la conduite de frein 72, un manostat 97 en aval du dispositif de relayage 93 et configuré pour vérifier s'il y a ou non un agent de pression pneumatique, à une valeur de pression au moins supérieure à une valeur seuil prédéterminée, dans la conduite de frein 72 et donc s'il y a une pression dans la chambre de pression de frein de service 13.

L'unité de contrôle et de commande 3 peut comporter sur la conduite de frein 72 un dispositif anti-enrayage 98 formé ici par une électrovanne monostable et configuré pour recevoir des signaux de commande correspondants à des paramètres d'anti-enrayage Param_AE du véhicule ; de sorte à assurer l'efficacité du freinage du véhicule ferroviaire.

Ces paramètres d'anti-enrayage Param_AE sont des informations représentatives de l'anti-enrayage ou de l'enrayage du véhicule et peuvent par exemple correspondre à la charge du véhicule, à sa vitesse de roulage ainsi qu'aux valeurs pilotes de frein de service et/ou d'urgence.

L'unité de contrôle et de commande 3 peut comporter sur sa conduite de commande 78 un détendeur 99 configuré pour limiter la valeur de pression par exemple ici à environ 6 bars.

L'unité de contrôle et de commande 3 peut comporter un ou plusieurs dispositifs de distribution pneumatique 51 dédiés à la conduite de frein de parking 71 et à la conduite preset 79.

Le ou les dispositifs de distribution pneumatique 51 peut être formés par exemple par des distributeurs monostables, aussi appelés électrovannes, connectés à la conduite de commande 78 et/ou à la conduite de frein 72 via la conduite preset 79 et/ou le dispositif de relayage 93, et/ou à la conduite de frein de parking 71.

Le ou les dispositifs de distribution pneumatique 51 peuvent être commandés via une ligne de commande 46 configurée pour faire circuler une consigne d'application du frein de parking CFP.

Lorsque la consigne d'application du frein de parking CFP est nulle, cela peut signifier que le frein de parking 7 doit être appliqué. Il s'agit dans ce cas d'une application dite sécuritaire.

Le cas échéant, le ou les dispositifs de distribution pneumatique 51 peuvent être configurés pour déconnecter la chambre de pression de frein de parking 25 du réservoir auxiliaire 73.

La chambre de pression de frein de parking 25 peut alors être vidangée et le doigt de blocage 20 peut venir immobiliser la tige 21 du piston 8. Le frein de parking est appliqué. Il se trouve dans un état dit serré.

Dans le même temps, le ou les dispositifs de distribution pneumatique 51 peuvent être configurés pour connecter la chambre de pression de frein de service 13 via la conduite de frein 72 au réservoir auxiliaire 73 via la conduite de commande 78 et la conduite d'alimentation et de distribution 74.

Il peut ainsi être autorisé le passage d'un agent de pression pneumatique, dit troisième agent de pression, jusqu'au dispositif de relayage 93 qui reçoit une valeur pilote de pression preset et qui génère une pression preset pour alimenter le cas échéant la chambre de pression de frein de service 13.

Pour enlever l'application du frein de parking 7, une consigne non nulle d'application du frein de parking CFP peut cheminer sur la ligne de commande 46.

Le cas échéant, le ou les dispositifs de distribution pneumatique 51 peuvent être configurés pour connecter la chambre de pression de frein de parking 25 via la conduite de frein de parking 71 au réservoir auxiliaire 73 via la conduite de commande 78 et la conduite d'alimentation et de distribution 74.

Il peut ainsi être autorisé le passage d'un agent de pression pneumatique, dit deuxième agent de pression, directement jusqu'à la chambre de pression de frein de parking 25 via la conduite de frein de parking 71. Le doigt de blocage 20 est alors reculé dans cette chambre et libère la tige 21 du piston 8.

Dans le même temps, le ou les dispositifs de distribution pneumatique 51 peuvent être configurés pour déconnecter la chambre de pression de frein de service 13 du réservoir auxiliaire 73.

Le passage du troisième agent de pression pneumatique jusqu'au dispositif de relayage 93 peut ainsi être interdit et ce dernier ne reçoit donc pas de valeur pilote de pression preset et vidange la pression preset le cas échéant.

Le frein de parking n'est alors pas appliqué. Il se trouve dans un état dit desserré.

L'unité de contrôle et de commande 3 comporte un dispositif indicateur 100 configuré pour détecter et indiquer l'état dans lequel se trouve le frein de parking 7 et/ou le frein de service 6.

Le dispositif indicateur 100 de l'état dans lequel se trouve le frein de parking 7 et/ou le frein de service 6 est configuré pour recevoir une information représentative de la vidange et/ou de l'alimentation de la chambre de pression de frein de parking 25, via une première conduite d'état 52 qui est raccordée à la pièce de déverrouillage 29 du frein de parking 7.

Le dispositif indicateur 100 est configuré pour recevoir une information représentative de l'alimentation de la chambre de pression de frein de service 13 par le troisième agent de pression pneumatique, via une deuxième conduite d'état 53 qui est raccordée à la conduite preset 79.

Le dispositif indicateur 100 est configuré pour recevoir une information représentative de l'alimentation de la chambre de pression de frein de service 13 par le premier agent de pression pneumatique, via une troisième conduite d'état 54 qui est raccordée à la conduite de frein de service 75.

Ce dispositif indicateur 100 peut être configuré pour récupérer ces informations par exemple directement sur la conduite de frein de parking 71 et/ou sur la conduite preset 79 et/ou sur la conduite de frein de service 75.

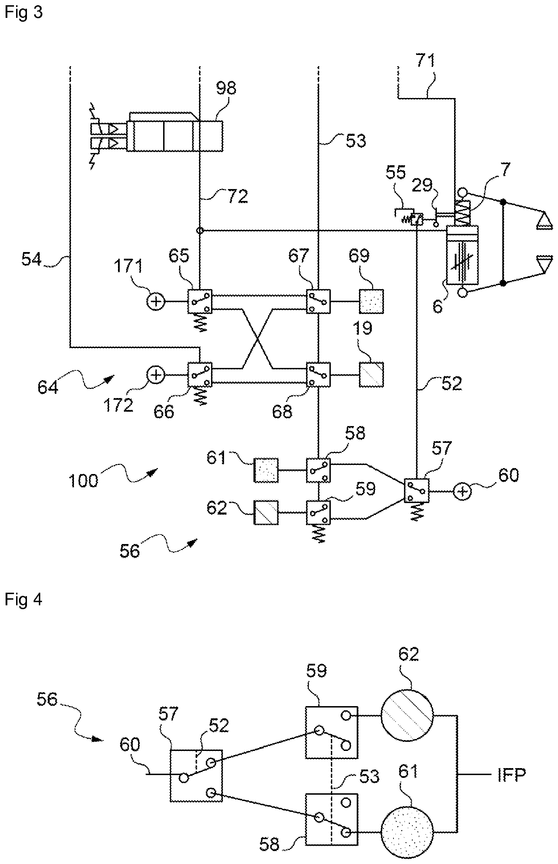

La figure 3 montre plus en détail le dispositif indicateur 100 de l'état dans lequel se trouve le frein de parking 7 et/ou le frein de service 6.

Le dispositif indicateur 100 est pourvu d'un premier système de commutation 56 prévu pour indiquer l'état du frein de parking 7.

Le premier système de commutation 56 peut comporter un premier dispositif contacteur de parking 55 assujetti mécaniquement à la pièce de déverrouillage 29, un deuxième dispositif contacteur de parking 57 qui est raccordé via la première conduite d'état 52 au premier dispositif contacteur de parking 55, un troisième dispositif contacteur de parking 58 et un quatrième dispositif contacteur de parking 59 qui sont raccordés chacun via la deuxième conduite d'état 53 à la conduite preset 79.

Le deuxième dispositif contacteur de parking 57 peut être alimenté électriquement via une source électrique 60.

Les troisième et quatrième dispositifs contacteur de parking respectifs 58 et 59 sont en outre respectivement raccordés d'une part au deuxième dispositif contacteur de parking 57 et d'autre part, à des dispositifs d'indication visuelle de parking 61 et 62 respectifs.

Les troisième et quatrième dispositifs contacteur de parking respectifs 58 et 59 peuvent par exemple être formés par des manostats ou des capteurs.

Le dispositif indicateur 100 est pourvu d'un deuxième système de commutation 64 prévu pour indiquer l'état du frein de service 6.

Le deuxième système de commutation 64 peut comporter un premier dispositif contacteur de service 65 qui est raccordé à la première conduite d'alimentation 72, un deuxième dispositif contacteur de service 66 qui est raccordé via la troisième conduite d'état 54 à la conduite de frein de service 75, un troisième dispositif contacteur de service 67 raccordé via la deuxième conduite d'état 53 à la conduite preset 79, et un quatrième dispositif contacteur de service 68 raccordé via la deuxième conduite d'état 53 à la conduite preset 79.

Les premier et deuxième dispositifs contacteur de service 65 et 66 peuvent être alimentés électriquement via une source électrique 171, 172 respective.

Les troisième et quatrième dispositifs contacteur respectifs de service 67 et 68 sont en outre chacun raccordés d'une part aux premier et deuxième dispositifs contacteur de service 65 et 66, et d'autre part, à des dispositifs d'indication visuelle de service 69 et 19 respectifs.

Les premier, deuxième, troisième et quatrième dispositifs contacteur de service 65, 66, 67 et 68 peuvent par exemple être formés par des manostats ou des capteurs.

On va décrire en référence aux figures 4 à 7 le fonctionnement du premier système de commutation 56 prévu pour indiquer l'état du frein de parking 7, noté IFP sur la figure 4.

L'information IFP peut se traduire par exemple par un voyant lumineux de couleur rouge généré par le dispositif d'indication visuelle de parking 62 lorsque le frein de parking 7 est dans l'état serré ; tandis qu'elle peut se traduire par exemple par un voyant lumineux de couleur verte généré par le dispositif d'indication visuelle de parking 61 lorsque le frein de parking 7 est dans l'état desserré.

En particulier, lorsque le deuxième dispositif contacteur de parking 57 reçoit une information de la première conduite d'état 52 selon laquelle la pièce de déverrouillage 29 est dans une position de déverrouillage et que le quatrième dispositif contacteur de parking 59 reçoit une information de la deuxième conduite d'état 53 selon laquelle il y a une consigne preset dans la conduite preset 79 correspondant à une consigne d'application du frein de parking 7, cela signifie que le frein de parking 7 est dans l'état serré et le dispositif d'indication visuelle de parking 62 est alors allumé.

Au contraire, si le deuxième dispositif contacteur de parking 57 reçoit une information de la première conduite d'état 52 selon laquelle la pièce de déverrouillage 29 est dans une position de déverrouillage, et que le troisième dispositif contacteur de parking 58 reçoit une information de la deuxième conduite d'état 53 selon laquelle il n'y a pas de consigne preset dans la conduite preset 79 correspondant à une consigne d'application du frein de parking 7, cela signifie que le frein de parking 7 est dans l'état desserré et le dispositif d'indication visuelle de parking 61 est alors allumé.

Les troisième et quatrième dispositifs contacteur de parking respectifs 58 et 59 peuvent par exemple être actionnés en fonction d'un seuil prédéterminé de la valeur de pression preset, ou de la valeur pilote de pression preset.

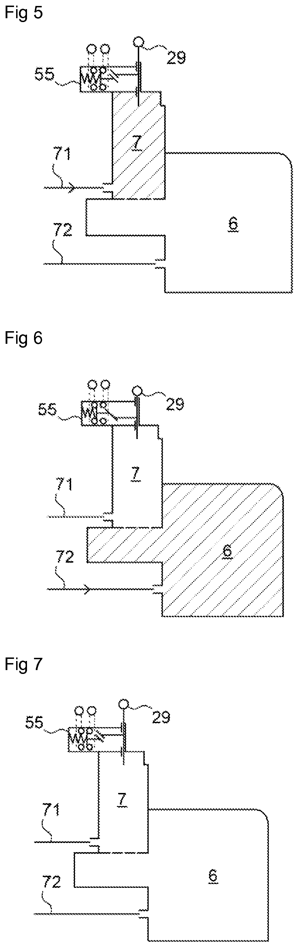

Les figures 5 à 7 montrent très schématiquement dans quelles conditions d'utilisation du frein de parking 7 et/ou du frein de service 6 le premier dispositif contacteur de parking 55 transmet une information relative à la position de la pièce de déverrouillage 29 au deuxième dispositif contacteur de parking 57 via la première conduite d'état 52.

Sur la figure 5, la première conduite d'alimentation 72 n'alimente pas la chambre de pression du frein de service 6 et la deuxième conduite d'alimentation 71 alimente la chambre de pression du frein de parking 7 ; de sorte que le frein de parking 7 est dans l'état desserré. La pièce de déverrouillage 29 se trouve dans une position de déverrouillage et le premier dispositif contacteur de parking 55 transmet l'information au deuxième dispositif contacteur de parking 57.

Sur la figure 6, la première conduite d'alimentation 72 alimente la chambre de pression du frein de service 6 et la deuxième conduite d'alimentation 71 n'alimente pas la chambre de pression du frein de parking 7 ; de sorte que le frein de parking 7 est dans l'état serré. La pièce de déverrouillage 29 se trouve dans une position de verrouillage et le premier dispositif contacteur de parking 55 transmet l'information au deuxième dispositif contacteur de parking 57.

Sur la figure 7, la première conduite d'alimentation 72 n'alimente pas la chambre de pression du frein de service 6 et la deuxième conduite d'alimentation 71 n'alimente pas la chambre de pression du frein de parking 7 ; de sorte que le frein de parking 7 est dans l'état desserré. La pièce de déverrouillage 29 se trouve dans une position de déverrouillage après avoir été déplacée manuellement, et le premier dispositif contacteur de parking 55 transmet l'information au deuxième dispositif contacteur de parking 57.

Ainsi qu'expliqué plus haut, l'information transmise par le premier dispositif contacteur de parking 55 au deuxième dispositif contacteur de parking 57 via la première conduite d'état 52 est traitée en combinaison avec l'information représentative de la consigne preset dans la conduite preset 79 en vue d'indiquer si le frein de parking 7 est dans l'état serré ou bien dans l'état desserré.

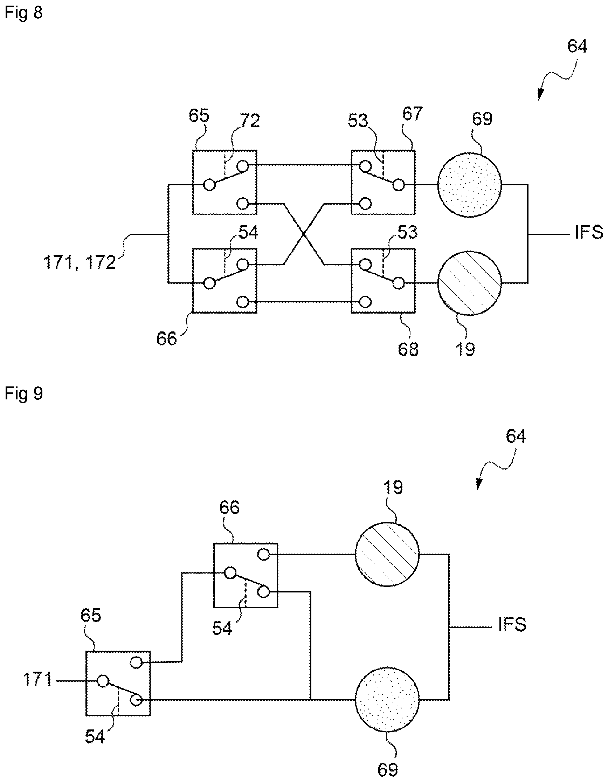

On va décrire en référence à la figure 8 le fonctionnement du deuxième système de commutation 64 prévu pour indiquer l'état du frein de service 6, noté IFS.

L'information IFS peut se traduire par exemple par un voyant lumineux de couleur rouge généré par le dispositif d'indication visuelle de service 19 lorsque le frein de service 6 est dans l'état serré ; tandis qu'elle peut se traduire par exemple par un voyant lumineux de couleur verte généré par le dispositif d'indication visuelle de service 69 lorsque le frein de service 6 est dans l'état desserré.

En particulier, lorsque le premier dispositif contacteur de service 65 reçoit une information de la première conduite d'alimentation 72 selon laquelle cette dernière alimente la chambre de pression du frein de service 6 et que le quatrième dispositif contacteur de service 68 reçoit une information de la deuxième conduite d'état 53 selon laquelle il n'y a pas de consigne preset dans la conduite preset 79, cela signifie que le frein de service 6 est dans l'état serré et le dispositif d'indication visuelle de service 19 est alors allumé.

Au surplus, si le deuxième dispositif contacteur de service 66 reçoit une information de la troisième conduite d'état 54 selon laquelle il y a une consigne de frein de service dans la conduite de frein de service 75 et que le quatrième dispositif contacteur de service 68 reçoit une information de la deuxième conduite d'état 53 selon laquelle il y a une consigne preset dans la conduite preset 79 correspondant à une consigne d'application du frein de parking 7, cela signifie que le frein de service 6 est dans l'état serré et le dispositif d'indication visuelle de service 19 est alors allumé.

Au contraire, lorsque le premier dispositif contacteur de service 65 reçoit une information de la première conduite d'alimentation 72 selon laquelle cette dernière n'alimente pas la chambre de pression du frein de service 6 et que le troisième dispositif contacteur de service 67 reçoit une information de la deuxième conduite d'état 53 selon laquelle il n'y a pas de consigne preset dans la conduite preset 79, cela signifie que le frein de service 6 est dans l'état desserré et le dispositif d'indication visuelle de service 69 est alors allumé.

Au surplus, si le deuxième dispositif contacteur de service 66 reçoit une information de la troisième conduite d'état 54 selon laquelle il n'y a pas de consigne de frein de service dans la conduite de frein de service 75 et que le troisième dispositif contacteur de service 67 reçoit une information de la deuxième conduite d'état 53 selon laquelle il y a une consigne preset dans la conduite preset 79 correspondant à une consigne d'application du frein de parking 7, cela signifie que le frein de service 6 est dans l'état desserré et le dispositif d'indication visuelle de service 69 est alors allumé.

Le premier dispositif contacteur de service 65 peut par exemple être actionné en fonction d'un seuil prédéterminé de valeur de pression de frein de service, le deuxième dispositif contacteur de service 66 peut par exemple être actionné en fonction d'un seuil prédéterminé de valeur pilote de pression de frein de service, et les troisième et quatrième dispositifs contacteur de service respectifs 67 et 68 peuvent par exemple être actionnés en fonction d'un seuil prédéterminé de valeur de pression preset, ou de valeur pilote de pression preset.

La figure 9 illustre une première variante de réalisation du deuxième système de commutation 64 prévu pour indiquer l'état du frein de service 6, noté IFS.

Les premier et deuxième dispositifs contacteur de service 65 et 66 sont ici montés en série, plutôt qu'en parallèle, et les troisième et quatrième dispositifs contacteur de service 67 et 68 sont supprimés.

Lorsque le premier dispositif contacteur de service 65 reçoit une information de la première conduite d'alimentation 72 selon laquelle cette dernière alimente la chambre de pression du frein de service 6 et que le deuxième dispositif contacteur de service 66 reçoit une information de la troisième conduite d'état 54 selon laquelle il y a une consigne de frein de service dans la conduite de frein de service 78, cela signifie que le frein de service 6 est dans l'état serré et le dispositif d'indication visuelle de service 19 est alors allumé.

Au contraire, si le premier dispositif contacteur de service 65 reçoit une information de la première conduite d'alimentation 72 selon laquelle cette dernière n'alimente pas la chambre de pression du frein de service 6, cela signifie que le frein de service 6 est dans l'état desserré et le dispositif d'indication visuelle de service 69 est alors allumé.

Au surplus, lorsque le premier dispositif contacteur de service 65 reçoit une information de la première conduite d'alimentation 72 selon laquelle cette dernière alimente la chambre de pression du frein de service 6 et que le deuxième dispositif contacteur de service 66 reçoit une information de la troisième conduite d'état 54 selon laquelle il n'y a pas une consigne de frein de service dans la conduite de frein de service 78, cela signifie que le frein de service 6 devrait être dans l'état desserré et le dispositif d'indication visuelle de service 69 est alors allumé. Cependant, cette variante de réalisation ne permet pas d'intercepter un éventuel défaut de la commande du frein de service.

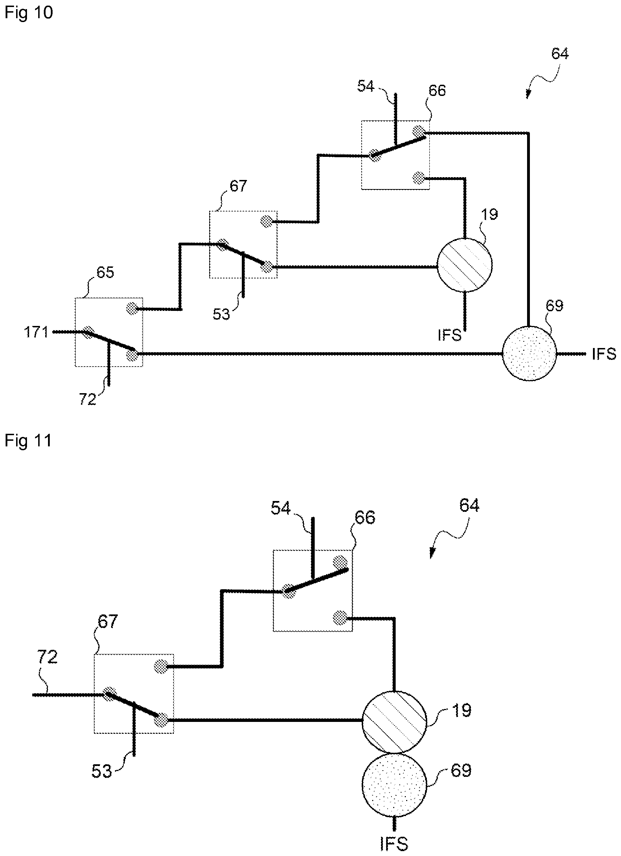

La figure 10 illustre une deuxième variante de réalisation du deuxième système de commutation 64 prévu pour indiquer l'état du frein de service 6, noté IFS. Cette deuxième variante diffère du mode de réalisation illustré sur la figure 8 en ce qu'il s'agit d'un montage dit série plutôt que parallèle. Par ailleurs, à l'inverse de la première variante illustrée sur la figure 9 et qui ne tient pas compte de la consigne preset, la deuxième variante tient compte de la consigne preset comme le mode de réalisation illustré sur la figure 8.

En particulier, sur la figure 10, le troisième dispositif contacteur de service 67 est interposé entre les premier et deuxième dispositifs contacteur de service 65 et 66.

Lorsque le premier dispositif contacteur de service 65 reçoit une information de la première conduite d'alimentation 72 selon laquelle cette dernière alimente la chambre de pression du frein de service 6, que le troisième dispositif contacteur de service 67 reçoit une information de la deuxième conduite d'état 53 selon laquelle il y a une consigne preset dans la conduite preset 79 correspondant à une consigne d'application du frein de parking 7, et que le deuxième dispositif contacteur de service 66 reçoit une information de la troisième conduite d'état 54 selon laquelle il y a une consigne de frein de service dans la conduite de frein de service 78, cela signifie que le frein de service 6 est dans l'état serré et le dispositif d'indication visuelle de service 19 est alors allumé.

Au surplus, si le premier dispositif contacteur de service 65 reçoit une information de la première conduite d'alimentation 72 selon laquelle cette dernière alimente la chambre de pression du frein de service 6 et que le troisième dispositif contacteur de service 67 reçoit une information de la deuxième conduite d'état 53 selon laquelle il n'y a pas de consigne preset dans la conduite preset 79, cela signifie que le frein de service 6 est dans l'état serré et le dispositif d'indication visuelle de service 19 est alors allumé.

Au contraire, lorsque le premier dispositif contacteur de service 65 reçoit une information de la première conduite d'alimentation 72 selon laquelle cette dernière alimente la chambre de pression du frein de service 6, que le troisième dispositif contacteur de service 67 reçoit une information de la deuxième conduite d'état 53 selon laquelle il y a une consigne preset dans la conduite preset 79 correspondant à une consigne d'application du frein de parking 7, et que le deuxième dispositif contacteur de service 66 reçoit une information de la troisième conduite d'état 54 selon laquelle il n'y a pas de consigne de frein de service dans la conduite de frein de service 78, cela signifie que le frein de service 6 est dans l'état desserré et le dispositif d'indication visuelle de service 69 est alors allumé.

Au surplus, si le premier dispositif contacteur de service 65 reçoit une information de la première conduite d'alimentation 72 selon laquelle cette dernière n'alimente pas la chambre de pression du frein de service 6, cela signifie que le frein de service 6 est dans l'état desserré et le dispositif d'indication visuelle de service 69 est alors allumé.

La figure 11 illustre une troisième variante de réalisation du deuxième système de commutation 64 prévu pour indiquer l'état du frein de service 6, noté IFS.

Les deuxième et troisième dispositifs contacteur de service 66 et 67 sont des valves pneumatiques à seuil qui sont alimentées directement via la première conduite d'alimentation 72. Les premier et quatrième dispositifs contacteur de service sont supprimés.

En particulier, lorsque la première conduite d'alimentation 72 alimente la chambre de pression du frein de service 6 et que le troisième dispositif contacteur de service 67 reçoit une information de la deuxième conduite d'état 53 selon laquelle il n'y a pas de consigne preset dans la conduite preset 79, cela signifie que le frein de service 6 est dans l'état serré de sorte que le dispositif d'indication visuelle de service 19 est alors visible.

Au surplus, lorsque la première conduite d'alimentation 72 alimente la chambre de pression du frein de service 6, que le troisième dispositif contacteur de service 67 reçoit une information de la deuxième conduite d'état 53 selon laquelle il y a une consigne preset dans la conduite preset 79 correspondant à une consigne d'application du frein de parking 7, et que le deuxième dispositif contacteur de service 66 reçoit une information de la troisième conduite d'état 54 selon laquelle il y a une consigne de frein de service dans la conduite de frein de service 78, cela signifie que le frein de service 6 est dans l'état serré et le dispositif d'indication visuelle de service 19 est alors visible.

Au contraire, lorsque la première conduite d'alimentation 72 n'alimente pas la chambre de pression du frein de service 6, ou bien que la première conduite d'alimentation 72 alimente la chambre de pression du frein de service 6, que le troisième dispositif contacteur de service 67 reçoit une information de la deuxième conduite d'état 53 selon laquelle il y a une consigne preset dans la conduite preset 79 correspondant à une consigne d'application du frein de parking 7 et que le deuxième dispositif contacteur de service 66 reçoit une information de la troisième conduite d'état 54 selon laquelle il n'y a pas de consigne de frein de service dans la conduite de frein de service 78, cela signifie que le frein de service 6 est dans l'état desserré et le dispositif d'indication visuelle de service 69 est alors visible.

Dans une variante non illustrée, le système de freinage ferroviaire n'est pas du type comme celui décrit en référence à la figure 1, mais plutôt un système de freinage ferroviaire à frein de parking à ressort, du type de celui décrit dans la demande de brevet européen EP 2 154 040.

Dans un tel système de freinage ferroviaire à frein de parking à ressort, la présente invention propose de fournir un dispositif indicateur de frein de parking qui est prévu pour indiquer l'état serré ou desserré de ce dernier.

L'information relative à l'état du frein de parking peut se traduire par exemple par un voyant lumineux de couleur rouge généré par un dispositif d'indication visuelle de parking lorsque le frein de parking est dans l'état serré ; tandis qu'elle peut se traduire par exemple par un voyant lumineux de couleur verte généré par un autre dispositif d'indication visuelle de parking lorsque le frein de parking est dans l'état desserré.

En particulier, le dispositif indicateur de frein de parking peut comporter un premier dispositif contacteur de parking assujetti mécaniquement à une pièce de déverrouillage du même type que celle décrite plus haut et prévue pour faire passer le frein de parking de son état serré à son état desserré.

Le dispositif indicateur de frein de parking peut comporter en outre un deuxième dispositif contacteur de parking qui est raccordé via une première conduite d'état au premier dispositif contacteur de parking.

Le dispositif indicateur de frein de parking peut également comporter un troisième dispositif contacteur raccordé à une autre conduite d'état elle-même raccordée soit à une conduite d'alimentation du frein de parking, soit à une conduite de consigne du frein de parking.

Le deuxième et le troisième dispositifs contacteur de parking peuvent être alimentés électriquement via une source électrique respective.

Lorsque le deuxième dispositif contacteur de parking reçoit une information de la conduite d'état selon laquelle la pièce de déverrouillage est dans une position de verrouillage et que le troisième dispositif contacteur de parking reçoit une information de l'autre conduite d'état selon laquelle il y a une consigne de frein de parking et/ou que la chambre de pression de frein de parking du système n'est pas alimentée, correspondant à une consigne d'application du frein de parking, cela signifie que le frein de parking est dans l'état serré et un des dispositifs d'indication visuelle de parking est alors allumé.

Lorsque le deuxième dispositif contacteur de parking reçoit une information de la conduite d'état selon laquelle la pièce de déverrouillage est dans une position de déverrouillage, cela signifie que le frein de parking est dans l'état desserré et l'autre des dispositifs d'indication visuelle de parking est alors allumé, quelle que soit l'information reçue par le troisième dispositif contacteur de parking.

## Revendications

1. Système de freinage pour véhicule ferroviaire à freins (5) à au moins une garniture ou à au moins une semelle, comportant un corps (2), une timonerie de freinage (4) configurée pour agir sur au moins un dit frein (5), un frein de service (6) comportant un piston de freinage (8) mobile par rapport audit corps (2) pour agir sur ladite timonerie de freinage (4) et délimitant avec ledit corps (2) une chambre de pression de frein de service (13) configurée pour être alimentée par un premier agent de pression pneumatique pour mettre ledit piston de freinage (8) dans une position de freinage de service, ainsi qu'un frein de parking (7) configuré pour agir sur ledit piston de freinage (8) dudit frein de service (6) et admettant une configuration de travail et une configuration de repos ; ledit frein de parking (7) comportant un dispositif de blocage (20) mobile par rapport audit corps (2) pour agir sur ledit piston de freinage (8) et admettant une première position et une seconde position dans laquelle ledit dispositif de blocage (20) est configuré pour immobiliser ledit piston de freinage (8) en position de freinage de service, ledit frein de parking (7) étant alors en configuration de travail, et un dispositif de commande (23, 24) mobile par rapport audit corps (2), délimitant avec ledit corps (2) une chambre de pression de frein de parking (25) configurée pour être alimentée par un deuxième agent de pression pneumatique, et admettant une position de verrouillage dans laquelle ledit dispositif de commande (23, 24) est configuré pour maintenir ledit dispositif de blocage dans sa seconde position, et le système comporte en outre un dispositif de relayage (93) configuré pour générer, à partir dudit premier agent de pression pneumatique, une pression d'utilisation à un débit déterminé pour le remplissage de ladite chambre de pression de frein de service (13) pour mettre ledit piston de freinage (8) dans sa position de freinage de service, ledit dispositif de relayage (93) étant raccordé à ladite chambre de pression de frein de service par une première conduite d'alimentation (72) du frein de service, et un dispositif indicateur de frein de service (100) configuré pour recevoir au moins une information représentative de l'alimentation et/ou de la vidange de ladite chambre de pression de frein de service (13) par ledit premier agent de pression pneumatique, avec le dispositif indicateur de frein de service (100) qui comporte au moins un dispositif contacteur de service (66), dit deuxième dispositif contacteur de service, raccordé via une conduite d'état (54) à une conduite de frein de service (75) située en amont du dispositif de relayage (93), et configuré pour récupérer ladite information représentative de l'alimentation et/ou de la vidange de la chambre de pression de frein de service.

2. Système de freinage selon la revendication 1 **caractérisé en ce que** ledit système de freinage ferroviaire est configuré pour alimenter la chambre de pression de frein de service (13) avec un autre agent de pression pneumatique dont la valeur de pression est déterminée, de sorte à appliquer un effort de freinage déterminé lorsque ledit frein de parking (7) est en configuration de travail, et ledit dispositif indicateur de frein de service (100) est configuré pour recevoir au moins une information représentative de l'alimentation et/ou de la vidange de ladite chambre de pression de frein de service (13) par ledit autre agent de pression pneumatique.

3. Système de freinage selon l'une des revendications 1 et 2, **caractérisé en ce que** ledit dispositif indicateur de frein de service (100) comporte en outre un premier dispositif contacteur de service (65) qui est raccordé à une première conduite d'alimentation (72) du frein de service, et/ou un troisième dispositif contacteur de service (67) raccordé via une conduite d'état (53) à une conduite de frein de parking (79), et/ou un quatrième dispositif contacteur de service (68) raccordé via une conduite d'état (53) à une conduite de frein de parking (79).

4. Système de freinage selon la revendication 3 **caractérisé en ce que** ledit dispositif indicateur de frein de service (100) comporte un deuxième dispositif contacteur de service qui est raccordé via une conduite d'état à une conduite de frein de service et les premier, troisième et quatrième dispositifs contacteur respectifs de service, les troisième et quatrième dispositifs contacteur respectifs de service (67, 68) étant raccordés d'une part aux premier et deuxième dispositifs contacteur de service (65, 66), et d'autre part, à des dispositifs d'indication visuelle de service (69, 19) du dispositif indicateur.

5. Système de freinage selon l'une quelconque des revendication 1 à 4, **caractérisé en ce que** les premier, deuxième, troisième et/ou quatrième dispositifs contacteur de service (65, 66, 67 et 68) sont formés par des manostats ou des capteurs.

6. Système de freinage selon l'une quelconque des revendication 1 à 5, **caractérisé en ce qu'**il est configuré pour que, lorsque le premier dispositif contacteur de service (65) reçoit une information de la première conduite d'alimentation (72) selon laquelle cette dernière alimente la chambre de pression du frein de service (6) et que le quatrième dispositif contacteur de service (68) reçoit une information de la conduite d'état (53) selon laquelle il n'y a pas de consigne de frein de parking dans la conduite de frein de parking (79), cela signifie que le frein de service (6) est dans l'état serré et le dispositif d'indication visuelle de service (19) est alors allumé ; et/ou lorsque le deuxième dispositif contacteur de service (66) reçoit une information de la conduite d'état (54) selon laquelle il y a une consigne de frein de service dans la conduite de frein de service (75) et que le quatrième dispositif contacteur de service (68) reçoit une information de la conduite d'état (53) selon laquelle il y a une consigne de frein de parking dans la conduite de frein de parking (79) correspondant à une consigne d'application du frein de parking (7), cela signifie que le frein de service (6) est dans l'état serré et le dispositif d'indication visuelle de service (19) est alors allumé.

7. Système de ferroviaire selon l'une quelconque des revendications 1 à 6, **caractérisé en ce qu'**il est configuré pour que, lorsque le premier dispositif contacteur de service (65) reçoit une information de la première conduite d'alimentation (72) selon laquelle cette dernière n'alimente pas la chambre de pression du frein de service (6) et que le troisième dispositif contacteur de service (67) reçoit une information de la conduite d'état (53) selon laquelle il n'y a pas de consigne de frein de parking dans la conduite de frein de parking (79), cela signifie que le frein de service (6) est dans l'état desserré et le dispositif d'indication visuelle de service (69) est alors allumé ; et/ou lorsque le deuxième dispositif contacteur de service (66) reçoit une information de la conduite d'état (54) selon laquelle il n'y a pas de consigne de frein de service dans la conduite de frein de service (75) et que le troisième dispositif contacteur de service (67) reçoit une information de la conduite d'état (53) selon laquelle il y a une consigne de frein de parking dans la conduite de frein de parking (79) correspondant à une consigne d'application du frein de parking (7), cela signifie que le frein de service (6) est dans l'état desserré et le dispositif d'indication visuelle de service (69) est alors allumé.

8. Système de freinage selon l'une quelconque des revendications 1 à 6, **caractérisé en ce qu'**il est configuré pour que, lorsque le premier dispositif contacteur de service (65) reçoit une information de la première conduite d'alimentation (72) selon laquelle cette dernière alimente la chambre de pression du frein de service (6) et que le deuxième dispositif contacteur de service (66) reçoit une information de la conduite d'état (54) selon laquelle il y a une consigne de frein de service dans la conduite de frein de service (78), cela signifie que le frein de service (6) est dans l'état serré et le dispositif d'indication visuelle de service (19) est alors allumé.

9. Système de freinage selon selon l'une quelconque des revendications 1 à 6 et 8, **caractérisé en ce qu'**il est configuré pour que, lorsque le premier dispositif contacteur de service (65) reçoit une information de la première conduite d'alimentation (72) selon laquelle cette dernière n'alimente pas la chambre de pression du frein de service (6), cela signifie que le frein de service est dans l'état desserré et le dispositif d'indication visuelle de service (69) est alors allumé ; et/ou lorsque le premier dispositif contacteur de service (65) reçoit une information de la première conduite d'alimentation (72) selon laquelle cette dernière alimente la chambre de pression du frein de service (6) et que le deuxième dispositif contacteur de service (66) reçoit une information de la conduite d'état (54) selon laquelle il n'y a pas une consigne de frein de service dans la conduite de frein de service (78), cela signifie que le frein de service devrait être dans l'état desserré et le dispositif d'indication visuelle de service (69) est alors allumé.

10. Système de freinage selon l'une quelconque des revendications 1 à 5, **caractérisé en ce que** le troisième dispositif contacteur de service (67) est interposé entre les premier et deuxième dispositifs contacteur de service (65, 66).

11. Système de freinage selon la revendication 10 **caractérisé en ce qu'**il est configuré pour que, lorsque le premier dispositif contacteur de service (65) reçoit une information de la première conduite d'alimentation (72) selon laquelle cette dernière alimente la chambre de pression du frein de service (6), que le troisième dispositif contacteur de service (67) reçoit une information de la conduite d'état (53) selon laquelle il y a une consigne de frein de parking dans la conduite de frein de parking (79) correspondant à une consigne d'application du frein de parking (7), et que le deuxième dispositif contacteur de service (66) reçoit une information de la conduite d'état (54) selon laquelle il y a une consigne de frein de service dans la conduite de frein de service (78), cela signifie que le frein de service est dans l'état serré et le dispositif d'indication visuelle de service (19) est alors allumé ; et/ou lorsque le premier dispositif contacteur de service (65) reçoit une information de la première conduite d'alimentation (72) selon laquelle cette dernière alimente la chambre de pression du frein de service (6) et que le troisième dispositif contacteur de service (67) reçoit une information de la conduite d'état (53) selon laquelle il n'y a pas de consigne de frein de parking dans la conduite de frein de parking (79), cela signifie que le frein de service est dans l'état serré et le dispositif d'indication visuelle de service (19) est alors allumé.

12. Système de freinage selon l'une des revendications 10 et 11, **caractérisé en ce qu'**il est configuré pour que, lorsque le premier dispositif contacteur de service (65) reçoit une information de la première conduite d'alimentation (72) selon laquelle cette dernière alimente la chambre de pression du frein de service (6), que le troisième dispositif contacteur de service (67) reçoit une information de la conduite d'état (53) selon laquelle il y a une consigne de frein de parking dans la conduite de frein de parking (79) correspondant à une consigne d'application du frein de parking (7), et que le deuxième dispositif contacteur de service (66) reçoit une information de la conduite d'état (54) selon laquelle il n'y a pas de consigne de frein de service dans la conduite de frein de service (78), cela signifie que le frein de service (6) est dans l'état desserré et le dispositif d'indication visuelle de service (69) est alors allumé ; et/ou le premier dispositif contacteur de service (65) reçoit une information de la première conduite d'alimentation (72) selon laquelle cette dernière n'alimente pas la chambre de pression du frein de service (6), cela signifie que le frein de service est dans l'état desserré et le dispositif d'indication visuelle de service (69) est alors allumé.

13. Véhicule ferroviaire à freins à au moins une garniture ou à au moins une semelle, comportant au moins un système de freinage selon l'une quelconque des revendications 1 à 12, qui est configuré pour agir sur ladite au moins une garniture ou sur ladite au moins une semelle dudit véhicule ferroviaire.

## Patentansprüche

1. Bremssystem für ein Schienenfahrzeug mit Bremsen (5) mit mindestens einem Belag oder mindestens einem Klotz, umfassend einen Körper (2), ein Bremsgestänge (4), das so konfiguriert ist, dass es auf mindestens eine der Bremsen (5) einwirkt, eine Betriebsbremse (6), die einen Bremskolben (8) umfasst, der im Verhältnis zum Körper (2) beweglich ist, um auf das Bremsgestänge (4) zu wirken, und der mit dem Körper (2) eine Druckkammer (13) der Betriebsbremse begrenzt, die so konfiguriert ist, dass sie von einem ersten pneumatischen Druckmittel versorgt wird, um den Bremskolben (8) in eine Betriebsbremsposition zu bringen, sowie eine Feststellbremse (7), die so konfiguriert ist, dass sie auf den Bremskolben (8) der Betriebsbremse (6) einwirkt, und die eine Arbeitskonfiguration und einer Ruhekonfiguration ermöglicht; wobei die Feststellbremse (7) eine Arretiervorrichtung (20) umfasst, die im Verhältnis zum Körper (2) beweglich ist, um auf den Bremskolben (8) einzuwirken, und die eine erste Position und eine zweite Position ermöglicht, in der die Arretiervorrichtung (20) so konfiguriert ist, dass sie den Bremskolben (8) in der Betriebsbremsposition arretiert, wobei die Feststellbremse (7) sich dann in der Arbeitskonfiguration befindet, und eine Steuervorrichtung (23, 24), die im Verhältnis zum Körper (2) beweglich ist, mit dem Körper (2) eine Druckkammer (25) der Feststellbremse begrenzt, die so konfiguriert ist, dass sie von einem zweiten pneumatischen Druckmittel versorgt wird, und eine Arretierposition ermöglicht, in der die Steuervorrichtung (23, 24) so konfiguriert ist, dass sie die Arretiervorrichtung in ihrer zweiten Position hält, und wobei das System ferner eine Relaisvorrichtung (93) umfasst, die so konfiguriert ist, dass sie aus dem ersten pneumatischen Druckmittel einen Betriebsdruck mit einer bestimmten Durchflussrate erzeugt, um die Druckkammer (13) der Betriebsbremse zu füllen, um den Bremskolben (8) in seine Betriebsbremsposition zu bringen, wobei die Relaisvorrichtung (93) an die Druckkammer der Betriebsbremse durch eine erste Versorgungsleitung (72) der Betriebsbremse angeschlossen ist, und eine Anzeigevorrichtung (100) der Betriebsbremse, die so konfiguriert ist, dass sie mindestens eine Information empfängt, die die Versorgung und/oder die Entleerung der Druckkammer (13) der Betriebsbremse durch das erste pneumatische Druckmittel darstellt, wobei die Anzeigevorrichtung (100) der Betriebsbremse, die mindestens eine Betriebsschützvorrichtung (66) umfasst, die zweite Betriebsschützvorrichtung, über eine Zustandsleitung (54) an eine Betriebsbremsleitung (75) angeschlossen ist, die sich stromaufwärts der Relaisvorrichtung (93) befindet und so konfiguriert ist, dass sie die Informationen abruft, die die Versorgung und/oder die Entleerung der Druckkammer der Betriebsbremse darstellt.

2. Bremssystem nach Anspruch 1, **dadurch gekennzeichnet, dass** das Eisenbahnbremssystem so konfiguriert ist, dass es die Druckkammer (13) der Betriebsbremse mit einem anderen pneumatischen Druckmittel versorgt, dessen Druckwert bestimmt wird, um eine bestimmte Bremskraft auszuüben, wenn sich die Feststellbremse (7) in der Arbeitskonfiguration befindet, und die Anzeigevorrichtung (100) der Betriebsbremse so konfiguriert ist, dass sie mindestens eine Information empfängt, die die Versorgung und/oder die Entleerung der Druckkammer (13) der Betriebsbremse durch das andere pneumatische Druckmittel darstellt.

3. Bremssystem nach einem der Ansprüche 1 und 2, **dadurch gekennzeichnet, dass** die Anzeigevorrichtung (100) der Betriebsbremse ferner eine erste Betriebsschützvorrichtung (65) umfasst, die an eine erste Versorgungsleitung (72) der Betriebsbremse angeschlossen ist, und/oder eine dritte Betriebsschützvorrichtung (67), die über eine Zustandsleitung (53) an eine Feststellbremsleitung (79) angeschlossen ist, und/oder eine vierte Betriebsschützvorrichtung (68), die über eine Zustandsleitung (53) an eine Feststellbremsleitung (79) angeschlossen ist.

4. Bremssystem nach Anspruch 3, **dadurch gekennzeichnet, dass** die Anzeigevorrichtung (100) der Betriebsbremse eine zweite Betriebsschützvorrichtung aufweist, die über eine Zustandsleitung an eine Betriebsbremsleitung und jeweils die erste, die dritte und die vierte Betriebsschützvorrichtung angeschlossen ist, wobei die dritte und die vierte Betriebsschützvorrichtung (67, 68) jeweils einerseits an die erste und die zweite Betriebsschützvorrichtung (65, 66) und andererseits an die optischen Betriebsanzeigevorrichtungen (69, 19) der Anzeigevorrichtung angeschlossen ist.

5. Bremssystem nach einem der Ansprüche 1 bis 4, **dadurch gekennzeichnet, dass** die erste, die zweite, die dritte und/oder die vierte Betriebsschützvorrichtung (65, 66, 67 und 68) durch Druckschalter oder Sensoren gebildet sind.

6. Bremssystem nach einem der Ansprüche 1 bis 5, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) versorgt, und wenn die vierte Betriebsschützvorrichtung (68) eine Information von der Zustandsleitung (53) empfängt, wonach in der Feststellbremsleitung (79) kein Sollwert der Feststellbremse vorliegt, dies bedeutet, dass sich die Betriebsbremse (6) im angezogenen Zustand befindet und die optische Betriebsanzeigevorrichtung (19) dann eingeschaltet wird; und/oder wenn die zweite Betriebsschützvorrichtung (66) eine Information von der Zustandsleitung (54) empfängt, wonach in der Betriebsbremsleitung (75) ein Sollwert der Betriebsbremse vorliegt, und wenn die vierte Betriebsschützvorrichtung (68) eine Information von der Zustandsleitung (53) empfängt, wonach in der Feststellbremsleitung (79) ein Sollwert der Feststellbremse vorliegt, der einem Betätigungsbefehl (7) für die Feststellbremse entspricht, dies bedeutet, dass sich die Betriebsbremse (6) im angezogenen Zustand befindet und die optische Betriebsanzeigevorrichtung (19) dann eingeschaltet wird.

7. Eisenbahnsystem nach einem der Ansprüche 1 bis 6, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) nicht versorgt, und die dritte Betriebsschützvorrichtung (67) eine Information von der Zustandsleitung (53) empfängt, wonach in der Feststellbremsleitung (79) kein Sollwert der Feststellbremse vorliegt, dies bedeutet, dass sich die Betriebsbremse (6) im gelösten Zustand befindet und die optische Betriebsanzeigevorrichtung (69) dann eingeschaltet wird; und/oder wenn die zweite Betriebsschützvorrichtung (66) eine Information von der Zustandsleitung (54) empfängt, wonach in der Betriebsbremsleitung (75) kein Sollwert der Betriebsbremse vorliegt, und wenn die dritte Betriebsschützvorrichtung (67) eine Information von der Zustandsleitung (53) empfängt, wonach in der Feststellbremsleitung (79) ein Sollwert der Feststellbremse vorliegt, der einem Betätigungsbefehl (7) für die Feststellbremse, dies bedeutet, dass sich die Betriebsbremse (6) im gelösten Zustand befindet und die optische Betriebsanzeigevorrichtung (69) dann eingeschaltet wird.

8. Bremssystem nach einem der Ansprüche 1 bis 6, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) versorgt, und wenn die zweite Betriebsschützvorrichtung (66) eine Information von der Zustandsleitung (54) empfängt, wonach in der Betriebsbremsleitung (78) ein Sollwert der Betriebsbremse vorliegt, dies bedeutet, dass sich die Betriebsbremse (6) im angezogenen Zustand befindet und die optische Betriebsanzeigevorrichtung (19) dann eingeschaltet wird.

9. Bremssystem nach einem der Ansprüche 1 bis 6 und 8, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) nicht versorgt, dies bedeutet, dass sich die Betriebsbremse im gelösten Zustand befindet und die optische Betriebsanzeigevorrichtung (69) dann eingeschaltet wird; und/oder wenn die erste Betriebsschützvorrichtung (65) eine Information von der ersten Versorgungsleitung (72) empfängt, wonach diese die Druckkammer der Betriebsbremse (6) versorgt, und wenn die zweite Betriebsschützvorrichtung (66) eine Information von der Zustandsleitung (54) empfängt, wonach in der Betriebsbremsleitung (78) kein Sollwert der Betriebsbremse vorliegt, die bedeutet, dass sich die Betriebsbremse im gelösten Zustand befinden sollte und die optische Betriebsanzeigevorrichtung (69) dann eingeschaltet wird.

10. Bremssystem nach einem der Ansprüche 1 bis 5, **dadurch gekennzeichnet, dass** die dritte Betriebsschützvorrichtung (67) zwischen der ersten und der zweiten Betriebsschützvorrichtung (65, 66) angeordnet ist.

11. Bremssystem nach Anspruch 10, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) versorgt, wenn die dritte Betriebsschützvorrichtung (67) eine Information von der Zustandsleitung (53) empfängt, wonach in der Feststellbremsleitung (79) ein Sollwert der Betriebsbremse vorliegt, der einem Betätigungsbefehl (7) für die Feststellbremse entspricht, und wenn die zweite Betriebsschützvorrichtung (66) eine Information von der Zustandsleitung (54) empfängt, wonach in der Betriebsbremsleitung (78) ein Sollwert der Betriebsbremse vorliegt, dies bedeutet, dass sich die Betriebsbremse im angezogenen Zustand befindet und die optische Betriebsanzeigevorrichtung (19) dann eingeschaltet wird; und/oder wenn die erste Betriebsschützvorrichtung (65) eine Information von der ersten Versorgungsleitung (72) empfängt, wonach diese die Druckkammer der Betriebsbremse (6) versorgt, und wenn die dritte Betriebsschützvorrichtung (67) eine Information von der Zustandsleitung (53) empfängt, wonach in der Feststellbremsenleitung (79) kein Sollwert der Feststellbremse vorliegt, dies bedeutet, dass sich die Betriebsbremse im angezogenen Zustand befindet und die optische Betriebsanzeigevorrichtung (19) dann eingeschaltet wird.

12. Bremssystem nach einem der Ansprüche 10 und 11, **dadurch gekennzeichnet, dass** es so konfiguriert ist, dass, wenn die erste Betriebsschützvorrichtung (65) eine Information von der ersten Versorgungsleitung (72) empfängt, wonach diese die Druckkammer der Betriebsbremse (6) versorgt, wenn die dritte Betriebsschützvorrichtung (67) eine Information von der Zustandsleitung (53) empfängt, wonach in der Feststellbremsleitung (79) ein Sollwert der Feststellbremse vorliegt, der einem Betätigungsbefehl (7) für die Feststellbremse entspricht, und wenn die zweite Betriebsschützvorrichtung (66) eine Information von der Zustandsleitung (54) empfängt, wonach in der Betriebsbremsleitung (78) kein Sollwert der Betriebsbremse vorliegt, dies bedeutet, dass sich die Betriebsbremse (6) im gelösten Zustand befindet und die optische Betriebsanzeigevorrichtung (69) dann eingeschaltet wird; und/oder die erste Betriebsschützvorrichtung (65) eine Information von der ersten Versorgungsleitung (72) empfängt, wonach diese die Druckkammer der Betriebsbremse (6) nicht versorgt, dies bedeutet, dass sich die Betriebsbremse im gelösten Zustand befindet und die optische Betriebsanzeigevorrichtung (69) dann eingeschaltet wird.

13. Schienenfahrzeug mit Bremsen mit mindestens einem Belag oder mindestens einem Klotz, umfassend mindestens ein Bremssystem nach einem der Ansprüche 1 bis 12, das so konfiguriert ist, dass es auf den mindestens einen Belag oder auf den mindestens einen Klotz des Schienenfahrzeugs einwirkt.

## Claims

1. A braking system for railway vehicle with brakes (5) with at least one lining or at least one sole, including a body (2), a brake rigging (4) configured to act on at least one said brake (5), a service brake (6) including a braking piston (8) which is movable relative to said body (2) to act on said brake rigging (4) and delimiting with said body (2) a service brake pressure chamber (13) configured to be supplied by a first pneumatic pressure medium to place said braking piston (8) in a service braking position, as well as a parking brake (7) configured to act on said braking piston (8) of said service brake (6) and admitting a work configuration and a rest configuration; said parking brake (7) including a blocking device (20) which is movable relative to said body (2) to act on said braking piston (8) and admitting a first position and a second position wherein said blocking device (20) is configured to immobilise said braking piston (8) in the service braking position, said parking brake (7) then being in the working configuration, and a control device (23, 24) which is movable relative to said body (2), delimiting with said body (2) a parking brake pressure chamber (25) configured to be supplied by a second pneumatic pressure medium, and admitting a locking position wherein said control device (23, 24) is configured to maintain said blocking device in its second position, and the system further includes a relay device (93) configured to generate, from said first pneumatic pressure medium, a pressure of use at a determined flow rate for filling said service brake pressure chamber (13) to place said brake piston (8) in its service braking position, said relay device (93) being connected to said service brake pressure chamber by a first supply line (72) of the service brake, and a service brake indicator device (100) configured to receive at least one piece of information representative of the supply and/or emptying of said service brake pressure chamber (13) by said first pneumatic pressure medium, with the service brake indicator device (100) which includes at least one service contactor device (66), called second service contactor device, connected via a status line (54) to a service brake line (75) located upstream of the relay device (93), and configured to retrieve said piece of information representative of the supply and/or emptying of the service brake pressure chamber.

2. The braking system according to claim 1 **characterised in that** said railway braking system is configured to supply the service brake pressure chamber (13) with another pneumatic pressure medium whose pressure value is determined, so to apply a determined braking force when said parking brake (7) is in working configuration, and said service brake indicator device (100) is configured to receive at least one piece of information representative of the supply and/or emptying of said service brake pressure chamber (13) by said other pneumatic pressure medium.

3. The braking system according to one of claims 1 and 2, **characterised in that** said service brake indicator device (100) further includes a first service contactor device (65) which is connected to a first supply line (72) of the service brake, and/or a third service contactor device (67) connected via a status line (53) to a parking brake line (79), and/or a fourth service contactor device (68) connected via a status line (53) to a parking brake line (79).

4. The braking system according to claim 3 **characterised in that** said service brake indicator device (100) includes a second service contactor device which is connected via a status line to a service brake line and the first, third and fourth respective service contactor devices, the third and fourth respective service contactor devices (67, 68) being connected on the one hand to the first and second service contactor devices (65, 66), and on the other hand, to visual service indication devices (69, 19) of the indicator device.

5. The braking system according to any one of claims 1 to 4, **characterised in that** the first, second, third and/or fourth service contactor devices (65, 66, 67 and 68) are formed by pressure switches or sensors.

6. The braking system according to any one of claims 1 to 5, **characterised in that** it is configured so that, when the first service contactor device (65) receives a piece of information from the first supply line (72) according to which the latter supplies the service brake (6) pressure chamber and that the fourth service contactor device (68) receives a piece of information from the status line (53) according to which there is no parking brake setpoint in the parking brake line (79), it means that the service brake (6) is in the engaged state and the visual service indication device (19) is then turned on; and/or when the second service contactor device (66) receives a piece of information from the status line (54) according to which there is a service brake setpoint in the service brake line (75) and that the fourth service contactor device (68) receives a piece of information from the status line (53) according to which there is a parking brake setpoint in the parking brake line (79) corresponding to a parking brake (7) application setpoint, this means that the service brake (6) is in the engaged state and the visual service indication device (19) is then turned on.

7. A railway system according to any one of claims 1 to 6, **characterised in that** it is configured so that, when the first service contactor device (65) receives a piece of information from the first supply line (72) according to which the latter does not supply the service brake (6) pressure chamber and that the third service contactor device (67) receives a piece of information from the status line (53) according to which there is no parking brake setpoint in the parking brake line (79), this means that the service brake (6) is in the released state and the visual service indication device (69) is then turned on; and/or when the second service contactor device (66) receives a piece of information from the status line (54) according to which there is no service brake setpoint in the service brake line (75) and that the third service contactor device (67) receives a piece of information from the status line (53) according to which there is a parking brake setpoint in the parking brake line (79) corresponding to a parking brake (7) application setpoint, this means that the service brake (6) is in the released state and the visual service indication device (69) is then turned on.

8. The braking system according to any one of claims 1 to 6, **characterised in that** it is configured so that, when the first service contactor device (65) receives a piece of information from the first supply line (72) according to which the latter supplies the service brake (6) pressure chamber and that the second service contactor device (66) receives a piece of information from the status line (54) according to which there is a service brake setpoint in the service brake line (78), it means that the service brake (6) is in the engaged state and the visual service indication device (19) is then turned on.

9. The braking system according to any one of claims 1 to 6 and 8, **characterised in that** it is configured so that, when the first service contactor device (65) receives a piece of information from the first supply line (72) according to which the latter does not supply the service brake (6) pressure chamber, this means that the service brake is in the released state and the visual service indication device (69) is then turned on; and/or when the first service contactor device (65) receives a piece of information from the first supply line (72) according to which the latter supplies the service brake (6) pressure chamber and that the second service contactor device (66) receives a piece of information from the status line (54) according to which there is no service brake setpoint in the service brake line (78), this means that the service brake should be in the released state and the visual service indication device (69) is then turned on.

10. The braking system according to any one of claims 1 to 5, **characterised in that** the third service contactor device (67) is interposed between the first and second service contactor devices (65, 66).

11. The braking system according to claim 10 **characterised in that** it is configured so that, when the first service contactor device (65) receives a piece of information from the first supply line (72) according to which the latter supplies the service brake pressure chamber (6), that the third service contactor device (67) receives a piece of information from the status line (53) according to which there is a parking brake setpoint in the parking brake line (79) corresponding to a parking brake (7) application setpoint, and that the second service contactor device (66) receives a piece of information from the status line (54) according to which there is a service brake setpoint in the service brake line (78), it means that the service brake is in the engaged state and the visual service indication device (19) is then turned on; and/or when the first service contactor device (65) receives a piece of information from the first supply line (72) according to which the latter supplies the service brake (6) pressure chamber and that the third service contactor device (67) receives a piece of information from the status line (53) according to which there is no parking brake setpoint in the parking brake line (79), this means that the service brake is in the engaged state and the visual service indication device (19) is then turned on.

12. The braking system according to one of claims 10 and 11, **characterised in that** it is configured so that, when the first service contactor device (65) receives a piece of information from the first supply line (72) according to which the latter supplies the service brake (6) pressure chamber, that the third service contactor device (67) receives a piece of information from the status line (53) according to which there is a parking brake setpoint in the parking brake line (79) corresponding to a parking brake (7) application setpoint, and that the second service contactor device (66) receives a piece of information from the status line (54) according to which there is no service brake setpoint in the service brake line (78), this means that the service brake (6) is in the released state and the visual service indication device (69) is then turned on; and/or the first service contactor device (65) receives a piece of information from the first supply line (72) according to which the latter does not supply the service brake (6) pressure chamber, this means that the brake is in the released state and the visual service indication device (69) is then turned on.

13. A railway vehicle with brakes with at least one lining or at least one sole, including at least one braking system (2) according to any one of claims 1 to 12, which is configured to act on said at least one lining or on said at least one sole of said railway vehicle.
